(19) Europäisches Patentamt
European Patent Office
Office européen des brevets

(11) **EP 4 427 331 B1**

(12) **EUROPÄISCHE PATENTSCHRIFT**

(45) Veröffentlichungstag und Bekanntmachung des Hinweises auf die Patenterteilung:
**08.04.2026 Patentblatt 2026/15**

(21) Anmeldenummer: **22809811.7**

(22) Anmeldetag: **28.10.2022**

(51) Internationale Patentklassifikation (IPC):
*H02P 29/64* (2016.01)   *H02K 11/20* (2016.01)
*H02K 21/22* (2006.01)   *G01K 1/024* (2021.01)
*G01K 3/00* (2006.01)   *G01K 7/01* (2006.01)
*G01K 7/16* (2006.01)   *H02P 25/022* (2016.01)

(52) Gemeinsame Patentklassifikation (CPC):
**H02K 21/22; G01K 1/024; G01K 3/005; G01K 7/01; G01K 7/16; H02K 11/20; H02P 29/64;** H02P 25/022

(86) Internationale Anmeldenummer:
**PCT/EP2022/080244**

(87) Internationale Veröffentlichungsnummer:
**WO 2023/078798 (11.05.2023 Gazette 2023/19)**

(54) **MESSANORDNUNG**

MEASURING ASSEMBLY

ENSEMBLE DE MESURE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **04.11.2021 DE 102021128668**

(43) Veröffentlichungstag der Anmeldung:
**11.09.2024 Patentblatt 2024/37**

(73) Patentinhaber: **ebm-papst Mulfingen GmbH & Co. KGaA & Co. KG**
**74673 Mulfingen (DE)**

(72) Erfinder: **SCHROTH, Sebastian**
**74635 Kupferzell (DE)**

(74) Vertreter: **Rüger Abel Patentanwälte PartGmbB**
**Webergasse 3**
**73728 Esslingen a. N. (DE)**

(56) Entgegenhaltungen:
**EP-A2- 2 211 455       WO-A1-2019/154801**
**DE-A1- 102007 043 872   DE-A1- 102016 106 431**

**Beschreibung**

Die Erfindung betrifft eine Messanordnung einer elektrischen Maschine, insbesondere eines Elektromotors. Als Elektromotor kann bei Ausführungsbeispielen ein bürstenloser Gleichstrommotor (BLDC) oder auch eine Synchronmaschine verwendet werden. Grundsätzlich eignet sich die Erfindung aber auch für andere elektrische Maschinen. Die elektrische Maschine wird über ein Steuergerät gesteuert. Das Steuergerät kann beispielsweise einen Inverter oder Umrichter aufweisen, um einen Strang Strom und/oder eine Strangspannung für jeden vorhandenen Phasenstrang einzustellen.

DE 10 2016 106 431 A1 beschreibt eine Messanordnung aufweisend mehrere Zweipole mit jeweils einer Kapazität und einer temperaturabhängigen Impedanz. Die Zweipole sind in einer elektrischen Maschine parallel zu den Motorsträngen geschaltet. Der Elektromotor wird über einen Frequenzumrichter gesteuert. Zusätzliche Leitungen zum Anschließen der Zweipole sind nicht erforderlich. Die Stromantwort beim Einschalten des Stromes durch einen der Motorstränge wird durch die temperaturabhängige Impedanz des parallel zu dem Motorstrang geschalteten Zweipols temperaturabhängig beeinflusst und kann ausgewertet werden, um die Temperatur an der Einbaustelle des Zweipols zu ermitteln.

Aus DE 10 2017 108 112 A1 ist ein Messverfahren zur Bestimmung der Wicklungstemperatur einer Motorwicklung eines Elektromotors bekannt. Hierzu wird die Motorwicklung mittels hochfrequenter Schwingung angeregt und eine Resonanzschwingung erzeugt. Die sich einstellende Resonanzfrequenz wird ermittelt und die Wicklungstemperatur aus der Resonanzfrequenz berechnet.

Aus EP 2 211 455 A2 ist ein einphasiger Induktionsmotor bekannt, bei dem mittels eines variablen Widerstandselements die Windungszahl einer Haupt- oder Zusatzwicklung variiert werden kann, um ein Anlaufen des Induktionsmotors zu ermöglichen. Das Widerstandselement kann ein PTC-Element sein, das nach dem Anlaufen des Induktionsmotors mit steigender Temperatur einen erhöhten Widerstand aufweist, so dass ein zum Starten durch das PTC-Element kurzgeschlossener Teil der Hauptwicklung aktiviert wird.

Ein Motor mit einem Umrichter ist in DE 10 2007 043 872 A1 beschrieben. Der Umrichter steuert den Motor abhängig von einer Drehzahl und einer Temperatur. Zur Messung der Temperatur sind Temperatursensoren vorhanden, deren Sensorsignale über einen Multiplexer im Motor weiter zum Umrichter geleitet werden.

WO 2019/154801 A1 betrifft ein Steuergerät zum Ansteuern eines Elektromotors mit einer Schnittstelle zum Anschließen eines Messwiderstandes. Der Widerstandswert des Messwiderstandes wird zur Temperaturüberwachung des Elektromotors ausgewertet.

Ausgehend vom Stand der Technik soll eine Messanordnung zur Ermittlung eines zu bestimmenden Parameters geschaffen werden, die eine Messwertübertragung zu einem Steuergerät ohne zusätzliche Übertragungsleitungen ermöglicht.

Diese Aufgabe wird durch eine Messanordnung mit den Merkmalen des Patentanspruches 1 gelöst.

Die Messanordnung dient dazu, einen zu messenden Parameter, beispielsweise eine Temperatur, eine Feuchtigkeit einer umgebenden Atmosphäre, eine Beschleunigung in wenigstens eine Raumrichtung, einen anderen physikalischen Parameter oder eine beliebige Kombination von mehreren der genannten Parameter an oder in einer elektrischen Maschine zu erfassen. Die elektrische Maschine kann bei einem Ausführungsbeispiel ein Elektromotor sein. Als Elektromotor kommen beispielsweise bürstenlose Gleichstrommotoren (BLDC) oder Synchronmotoren zum Einsatz. Die elektrische Maschine wird vorzugsweise mittels eines Steuergeräts angesteuert, das beispielsweise einen Inverter oder Umrichter oder eine andere geeignete Steuerschaltung aufweisen kann. Insbesondere ist das Steuergerät dazu eingerichtet, ein umlaufendes Statormagnetfeld zu erzeugen. Das Steuergerät kann für jeden vorhanden Phasenstrang der elektrischen Maschine einen Steuerausgang aufweisen, wobei der Steuerausgang über eine Steuerleitung mit dem jeweils zugeordneten Phasenstrang der elektrischen Maschine elektrisch verbunden ist.

Jeder Phasenstrang der elektrischen Maschine hat wenigstens eine, vorzugsweise wenigstens zwei in Reihe geschaltete Wicklungen. Jede Wicklung ist insbesondere um einen Zahn des Stators herum angeordnet und dazu eingerichtet, ein im Wesentlichen radial orientiertes Magnetfeld, insbesondere Statormagnetfeld, zu erzeugen.

Die Messanordnung weist eine Messschaltung auf. Die Messschaltung hat einen Kopplungszweig und einen mit dem Kopplungszweig gekoppelten Sensor. Der Sensor ist dazu eingerichtet, einen Sensorwert abhängig von dem zu messenden Parameter zu verändern. Dieser Sensorwert steht der Messschaltung somit zur Verfügung, die dazu eingerichtet ist, eine Kopplungszweigimpedanz des Kopplungszweigs abhängig vom Sensorwert und somit abhängig von dem zu messenden Parameter zu beeinflussen. Beispielsweise kann die Kopplungszweigimpedanz zwischen zwei oder mehr Zuständen geändert werden, wie etwa zwischen einem leitenden und einem sperrenden Zustand oder allgemein zwischen Zuständen mit sich unterscheidender Kopplungszweigimpedanz. Der Kopplungszweig ist mit wenigstens einer oder genau einer der Wicklungen von einem der vorhandenen Phasenstränge ohne galvanische Verbindung gekoppelt (z.B. induktiv). Der Kopplungszweig ist ohne galvanische Verbindung zu der wenigstens einen Wicklung und somit ohne galvanische Verbindung zu der elektrischen Maschine realisiert.

Unabhängig von der Art der Kopplung oder Verbindung beeinflusst die abhängig vom zu messenden Parameter beeinflussbare Kopplungszweigimpedanz die Gesamtimpedanz des Phasenstrangs. Darüber lassen sich zumindest temporäre Änderungen von elektrischen Größen erzeugen, die wiederum an den elektrischen Anschlüssen des Phasenstrangs erfasst werden können. Eine Auswerteeinheit kann die wenigstens eine veränderbare elektrische Größe an den ohnehin vorhandenen elektrischen Anschlüssen des Phasenstrangs erfassen und auswerten. Die Messschaltung kann die betreffende elektrische Größe zumindest temporär derart modifizieren, dass Daten bzw. Informationen zu der Auswerteeinheit übertragen werden, die insbesondere den Sensorwert beschreiben. Somit lässt sich ein Sensorwert bzw. der Wert des zu messenden Parameters übertragen. Der Phasenstrang wird über die erfindungsgemäße Messanordnung somit auch zur Datenübertragung verwendet, neben dem Erzeugen eines Magnetfeldes in der elektrischen Maschine.

Die wenigstens eine veränderbare elektrische Größe kann beispielsweise einen oder mehrere der folgenden Größen aufweisen:

- eine Phasenlage des Strangstromes im Verhältnis zur Strangspannung für den Phasenstrang und/oder
- ein Gradient des Strangstromes beim Einschalten und/oder Ausschalten des Strangstromes und/oder
- ein Betrag des Strangstromes und/oder ein Betrag der Strangspannung des betreffenden Phasenstrangs und/oder
- eine Gesamtimpedanz des Phasenstranges oder eine damit zusammenhängende elektrische Größe.

Durch das Ändern der Gesamtimpedanz des Phasenstranges können mehrere Effekte ausgelöst werden, die wiederum erfassbar sind. Beispielsweise kann die Drehzahl geändert werden (z.B. Reduzierung der Drehzahl durch Verringern der Gesamtimpedanz), die Induktivität des Phasenstranges kann verändert werden und/oder auch die Symmetrieverhältnisse zwischen den vorhandenen Phasensträngen können verändert werden.

Die Messschaltung kann ihren Zustand bzw. ihre Kopplungszweigimpedanz auch zwischen zwei oder mehreren Werten bzw. Beträgen moduliert umschalten, so dass zum Beispiel mehrere Sensorwerte oder komplexere Daten oder Informationen über den Phasenstrang aus der elektrischen Maschine auf einfache Weise nach außen übermittelt werden können.

Die Messanordnung kann auch mehrere Messschaltungen aufweisen. Diese können unterschiedlichen Phasensträngen bzw. unterschiedlichen Wicklungen zugeordnet sein.

Es ist vorteilhaft, wenn der Sensor der Messschaltung im Kopplungszweig angeordnet ist, so dass eine einfache Änderung der Kopplungszweigimpedanz durch den Sensorwert möglich ist. Der Sensor kann beispielsweise ein abhängig vom zu messenden Parameter veränderlicher Widerstand sein oder einen solchen Widerstand aufweisen. Der Sensor kann auch als schaltender Sensor ausgestaltet sein, der eine leitende Verbindung herstellt, wenn der zu erfassende Parameter einen Schwellenwert überschreitet und der den elektrischen Pfad durch den Kopplungszweig sperrt, wenn der zu erfassende Parameter denselben Schwellenwert oder einen anderen Schwellenwert unterschreitet (schaltender Sensor mit oder ohne Hysterese). Bei diesen Ausführungen ist der Sensor beispielsweise in Reihe oder parallel zu der Kopplungszweigimpedanz geschaltet oder ist Bestandteil der Kopplungszweigimpedanz.

Vorzugsweise hat die Kopplungszweigimpedanz des Kopplungszweigs einen ohmschen Anteil und/oder einen induktiven Anteil. Es ist bevorzugt, wenn die Kopplungszweigimpedanz keinen kapazitiven Anteil aufweist. Damit kann sichergestellt werden, dass der Strangstrom der Strangspannung nicht vorauseilt. Bei einer bevorzugten Ausführungsform überwiegt der ohmsche Anteil der Kopplungszweigimpedanz. Beispielsweise kann sowohl der kapazitive Anteil, als auch der induktive Anteil jeweils maximal 10% oder jeweils maximal 5% am Gesamtbetrag der Kopplungszweigimpedanz aufweisen. Insbesondere kann sowohl der kapazitive Anteil, als auch der induktive Anteil vernachlässigbar klein sein.

Die Messschaltung kann den Kopplungszweig in einen Zustand halten, in dem der Zweigstrom durch den Kopplungszweig kleiner ist als der Wicklungsstrom durch die wenigstens eine mit dem Kopplungszweig gekoppelte Wicklung, solange der zu messende Parameter in einem unkritischen Bereich ist. Beispielsweise kann der Zweigstrom maximal 10% oder maximal 5% des Wicklungsstroms betragen, solange der zu messende Parameter sich in einem unkritischen Bereich befindet. Ein unkritischer Wertebereich für den zu messenden Parameter kann vorgegeben bzw. eingestellt werden.

Die Messschaltung kann bei einem Ausführungsbeispiel einen mittels eines Steuersignals zwischen einem leitenden Zustand und einem sperrenden Zustand umschaltbaren Schalter aufweisen. Der Schalter ist vorzugsweise im Kopplungszweig angeordnet. Bei dem Schalter kann es sich um einen ansteuerbaren Halbleiterschalter handeln, beispielsweise einen Feldeffekttransistor oder Bipolartransistor.

Die Messschaltung kann dazu eingerichtet sein, das Steuersignal für den Schalter abhängig von dem Sensorwert bzw. abhängig von dem zu messenden Parameter zu erzeugen. Das Steuersignal kann beispielsweise ein Umschalten des Schalters bei Erreichen eines Schwellenwerts für den Sensorwert bzw. den zu messenden Parameter bewirken (mit oder ohne Hysterese zwischen dem Umschalten in den leitenden und dem Umschalten in den sperrenden Zustand). Das Steuersignal kann aber auch komplexere Informationen, beispielsweise mehrere Sensorwerte, übertragen und den Schalter z.B. zur Kodierung zwischen dem leitenden und dem sperrenden Zustand umschalten. Auf diese Weise können durch Modulation oder Kodierung Informationen übermittelt werden.

Der Kopplungszweig kann bei einem Ausführungsbeispiel eine Zusatzwicklung um wenigstens einen und vorzugsweise genau einen Zahn der elektrischen Maschine aufweisen. Dadurch kann eine induktive Kopplung zwischen der Zusatzwicklung des Kopplungszweiges und der wenigstens einen Wicklung des Phasenstranges der elektrischen Maschine erreicht werden, die an dem Zahn angeordnet ist. Der Zahn ist beispielsweise Bestandteil des Stators der elektrischen Maschine. Für jede Wicklung eines Phasenstrangs kann ein separater Zahn vorhanden sein. Die Zusatzwicklung kann eine einzige Windung oder mehrere Windungen aufweisen. Bevorzugt ist die Anzahl der Windungen der Zusatzwicklung wesentlich kleiner (z. B. mindestens 2 bis 3 mal kleiner) als die Anzahl der Windungen der parallel geschalteten Wicklung des Phasenstranges.

Die Messschaltung kann somit integraler Bestandteil der elektrischen Maschine sein, aber dabei ohne galvanische Verbindung mit der elektrischen Maschine auskommen. Abgesehen von der Zusatzwicklung können andere Bestandteile der Messschaltung auf einem gemeinsamen Träger, beispielsweise einer gemeinsamen Leiterplatte, angeordnet sein, die benachbart zu dem Zahn bzw. der Wicklung des Phasenstranges an oder in der elektrischen Maschine angeordnet ist.

Vorteilhafte Ausgestaltungen der Erfindung ergeben sich aus den abhängigen Ansprüchen, der Beschreibung und den Zeichnungen. Nachfolgend werden bevorzugte Ausführungsbeispiele der Erfindung anhand der beigefügten Zeichnungen im Einzelnen erläutert. In den Zeichnungen zeigen:

Figur 1 ein Blockschaltbild einer mittels eines Steuergeräts gesteuerten elektrischen Maschine aufweisend eine Messschaltung,

Figuren 2 und 3 jeweils ein elektrisches Blockschaltbild bzw. Ersatzschaltbild eines elektrischen Phasenstrangs der elektrischen Maschine aus Figur 1 mit jeweils einem Ausführungsbeispiel einer Messschaltung,

Figur 4 eine schematische Darstellung eines Ausführungsbeispiels einer elektrischen Maschine mit Blick entlang einer Drehachse, wobei an einem Zahn eine Messschaltung angeordnet ist und

Figur 5 ein Zeigerdiagramm zur Veranschaulichung der Phasenverschiebung zwischen einer Strangspannung und einem Strangstrom durch einen Phasenstrang der elektrischen Maschine.

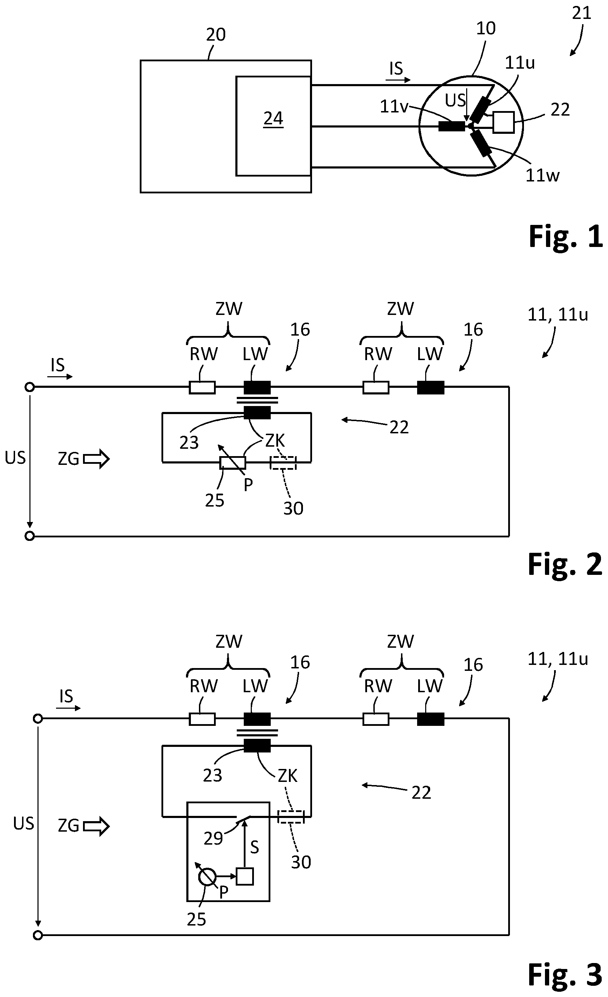

Figur 1 zeigt ein Blockschaltbild einer elektrischen Maschine 10 aufweisend mehrere Phasenstränge 11, beispielsgemäß einen ersten Phasenstrang 11u, einen zweiten Phasenstrang 11v und einen dritten Phasenstrang 11w. Wird für den Phasenstrang das Bezugszeichen 11 ohne zusätzliche Buchstabenkennung verwendet, gelten die Aussagen für mehrere oder alle Phasenstränge 11u, 11v, 11w.

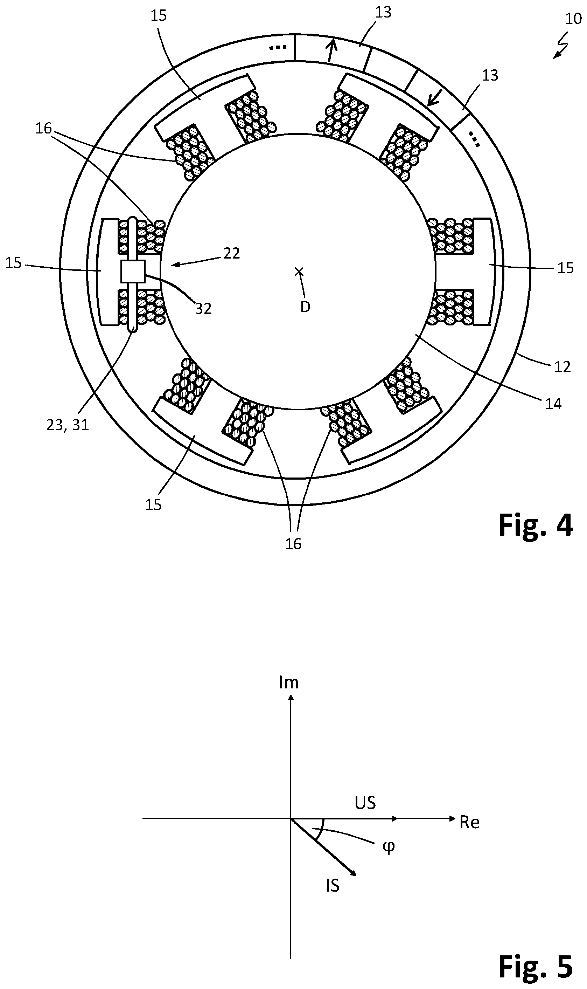

Die elektrische Maschine 10 kann beispielsweise ein Elektromotor sein, wie etwa ein bürstenloser Gleichstrommotor oder eine Synchronmaschine. In Figur 4 ist lediglich beispielhaft und schematisch ein Ausführungsbeispiel eines bürstenlosen Gleichstrommotors gezeigt. An einem um eine Drehachse D drehbaren Rotor 12 sind in Umfangsrichtung verteilt Permanentmagnete 13 angeordnet, die beispielsweise in Umfangsrichtung um die Drehachse D magnetisiert sein können. Ein Stator 14 der elektrischen Maschine 10 hat in Umfangsrichtung um die Drehachse D verteilt angeordnete Zähne 15, wobei lediglich beispielhaft beim Ausführungsbeispiel sechs Zähne 15 dargestellt sind. Die Anzahl der Zähne 15 kann auch größer sein, beispielsweise 12. Die Anzahl der Zähne 15 ist insbesondere geradzahlig.

An jedem Zahn 15 ist wenigstens eine oder genau eine Wicklung 16 angeordnet. Beim dargestellten Ausführungsbeispiel weist jeder Phasenstrang 11 zwei Wicklungen 16 auf, wobei die Anzahl der Wicklungen 16 jedes Phasenstranges 11 auch kleiner oder größer sein kann. Die sich beispielsgemäß bezüglich der Drehachse D gegenüberliegenden Wicklungen 16 gehören zu einem gemeinsamen Phasenstrang 11. Die Wicklungen 16 sind in Reihe zueinander geschaltet. Im Ersatzschaltbild kann jede Wicklung 16 durch eine Reihenschaltung aus einem Wicklungswiderstand RW und einer Wicklungsinduktivität LW gebildet werden. Der Wicklungswiderstand RW ist dabei ein ohmscher Widerstand. Für die Wicklungsimpedanz ZW jeder Wicklung 16 gilt:

$$ZW = RW + j\omega LW \qquad (1)$$

wobei $\omega$ die Kreisfrequenz ist und j den Imaginärteil kennzeichnet.

Die elektrische Maschine 10 wird mittels eines Steuergeräts 20 gesteuert. Das Steuergerät 20 ist dazu eingerichtet, eine Strangspannung US und/oder einen Strangstrom IS für den jeweils zugeordneten ersten Phasenstrang 11u, zweiten Phasenstrang 11v und dritten Phasenstrang 11w individuell einzustellen. Dadurch kann insbesondere ein um die Drehachse D umlaufendes Statormagnetfeld erzeugt werden, um den mit Permanentmagneten 13 versehenen Rotor 12 um die Drehachse D zu drehen. Das Steuergerät 20 kann hierfür beispielsweise eine Inverterschaltung aufweisen.

Die elektrische Maschine 10 ist mit einer Messanordnung 21 ausgestattet. Die Messanordnung 21 hat wenigstens eine Messschaltung 22, die einer der Phasenstränge 11 und beispielsgemäß dem ersten Phasenstrang 11u zugeordnet ist. Die Messschaltung 22 könnte auch einem der anderen Phasenstränge 11v, 11w zugeordnet sein. Die Messschaltung 22 ist in den Figuren 1 und 4 lediglich stark schematisiert dargestellt.

Wie es insbesondere in den Figuren 2 und 3 zu erkennen ist, weist die Messschaltung 22 einen mit einer der Wicklungen 16 gekoppelten Kopplungszweig 23 auf. Beispielsgemäß ist der Kopplungszweig 23 ohne galvanische Verbindung mit der wenigstens einen Wicklung 16 gekoppelt. Mittels des Kopplungszweigs 23 kann somit eine Gesamtimpedanz ZG des betreffenden Phasenstrangs 11 (beispielsgemäß des ersten Phasenstrangs 11u) beeinflusst werden. Der Kopplungszweig 23 hat eine Kopplungszweigimpedanz ZK, die veränderbar ist. Für die Gesamtimpedanz ZG des Phasenstrangs 11 gilt allgemein:

$$ZG = ZW + \frac{ZW \cdot ZK}{ZW + ZK} \qquad (2)$$

Die Gesamtimpedanz ZG oder eine durch die Gesamtimpedanz ZG beeinflusste elektrische Größe, beispielsweise der Strangstrom IS und/oder die Strangspannung US, kann durch eine Auswerteeinheit 24 des Steuergeräts 20 detektiert werden. Die Auswerteeinheit 24 des Steuergeräts 20 ist beim Ausführungsbeispiel somit Bestandteil der Messanordnung 21. Bei einer abgewandelten Ausführungsform könnte die Auswerteeinheit 24 auch als individuelle Baueinheit außerhalb des Steuergeräts 20 angeordnet und mit den zu den Phasensträngen 11 führenden Steuerleitungen verbunden sein.

Die Messschaltung 22 hat außerdem einen Sensor 25, dessen Sensorwert abhängig von einem zu messenden Parameter P variiert. Beispielsweise kann der Sensor 25 ein veränderbarer Widerstand sein, dessen Widerstandswert sich abhängig von dem Parameter P ändert. Der Sensor kann beispielsweise ein temperaturabhängiger Widerstand sein, wenn als Parameter P die Temperatur gemessen werden soll. Der Sensor 25 kann auch eine Schaltcharakteristik aufweisen, wonach er seinen Widerstandswert bzw. Leitwert abhängig von dem Parameter P zwischen zwei oder mehreren Zuständen stufenartig ändert, beispielsweise zwischen einem niederohmig leitenden Zustand und einem sperrenden Zustand. Hierfür kann der Sensor 25 beispielsweise einen Halbleiter aufweisen, der mindestens zwei verschiedene Zustände annehmen kann, wie etwa eine Diode, einen Transistor oder einen Thyristor oder alternativ einen anderen Schalter, beispielsweise einen Bimetallschalter.

Zusätzlich oder alternativ zur Temperatur T kann als Parameter P auch eine andere physikalische Größe gemessen werden, beispielsweise die Feuchtigkeit in der umgebenden Atmosphäre oder eine Beschleunigung in wenigstens einer Raumrichtung. Der Sensor 25 kann auch eine beliebige Kombination unterschiedlicher Parameter P erfassen.

Bei dem in Figur 2 dargestellten Ausführungsbeispiel ist der Sensor 25 im Kopplungszweig 23 angeordnet. Der Sensor 25 ist dazu eingerichtet, seinen Widerstandswert abhängig vom Parameter P zu verändern, entweder stufenweise zwischen wenigstens zwei Stufen oder gemäß einer kontinuierlichen Charakteristik. Dadurch wird die Kopplungszweigimpedanz ZK, die beim Ausführungsbeispiel im Wesentlichen oder ausschließlich durch die Impedanz des Sensors 25 gebildet ist, abhängig von dem zu messenden Parameter P verändert. Folglich ändert sich auch die Gesamtimpedanz ZG abhängig von dem zu messenden Parameter **P.** Diese Veränderung kann durch die Auswerteeinheit 24 ermittelt werden. Somit ist es möglich, über die elektrischen Anschlüsse des Phasenstrangs 11 (hier: erster Phasenstrang 11u) den zu messenden Parameter P an die Auswerteeinheit 24 bzw. das Steuergerät 20 zu übermitteln.

Eine Zusatzimpedanz 30 kann optional auch beim Ausführungsbeispiel nach Figur 2 in Reihe zum Sensor 25 geschaltet werden.

Die Ausgestaltung der Messschaltung 22 kann variieren. Ein weiteres Ausführungsbeispiel ist in Figur 3 dargestellt. Dort weist die Messschaltung 22 einen durch ein Steuersignal S ansteuerbaren Schalter 29 auf. Der Schalter 29 kann abhängig vom Steuersignal S einen leitenden Zustand oder einen sperrenden Zustand einnehmen. Der Schalter 29 kann beispielsweise durch einen Halbleiterschalter, insbesondere einen Bipolartransistor oder einen Feldeffekttransistor gebildet sein. Somit kann der parallele Strompfad durch den Kopplungszweig 23 abhängig vom Schaltzustand des Schalters 29 freigegeben oder vollständig gesperrt werden. Optional kann in Reihe zum dem Schalter 29 eine Zusatzimpedanz 30 aufweisend einen ohmschen Widerstand und/oder eine Induktivität geschaltet werden, die dann die Kopplungszweigimpedanz ZK im leitenden Zustand des Schalters 29 im Wesentlichen definiert.

Die Messschaltung 22 ist bei dem in Figur 3 dargestellten Ausführungsbeispiel dazu eingerichtet, das Steuersignal S abhängig vom Sensorwert des Sensors 25 und somit abhängig vom zu messenden Parameter P zu erzeugen. Über das Umschalten des Schalters 29 mittels des Steuersignals S kann somit in einem einfachen Fall beispielsweise das Überschreiten eines vorgegebenen Schwellenwerts durch den Sensorwert bzw. den Parameter P angezeigt werden. Alternativ dazu kann das Steuersignal S den Schalter 29 auch entsprechend einer vorgegebenen Modulation bzw. einem vorgegebenen Code zwischen dem leitenden und dem sperrenden Zustand umschalten, so dass durch eine binäre Kodierung bzw. Modulation komplexere Informationen, beispielsweise beliebige Sensorwerte bzw. Werte für den zu messenden Parameter P an die Auswerteeinheit 24 übermittelt werden können. In der Auswerteeinheit 24 kann durch Demodulation bzw. Dekodierung dann der Wert für den zu messenden Parameter P wieder erhalten werden. Auf diese Weise kann beispielsweise eine serielle Übertragung einer Bitfolge an die Auswerteeinheit 24 erfolgen.

Wie es in Figur 3 zu erkennen ist, kann der Sensor 25 bei diesem Ausführungsbeispiel außerhalb des Kopplungszweigs 23 angeordnet sein und indirekt mit dem Kopplungszweig und beispielsgemäß dem steuerbaren Schalter 29 verbunden sein.

Durch das Verändern der Gesamtimpedanz ZG abhängig vom Parameter P lassen sich eine oder mehrere der nachfolgenden elektrischen Größen beeinflussen, die von der Auswerteeinheit 24 detektiert werden können, um den übermittelten Wert für den zu messenden Parameter P zu erhalten:

- der Betrag des Strangstromes IS und/oder der Strangspannung US;
- die Gesamtimpedanz ZG bzw. die Induktivität des Phasenstranges 11, mit dem die Messschaltung 22 gekoppelt ist;
- der Gradient des Strangstromes IS beim Anlegen einer Strangspannung US an den betreffenden Phasenstrang 11;
- eine Phasenverschiebung φ zwischen der Strangspannung US und dem Strangstrom IS (Figur 5);
- das Verhalten der elektrischen Maschine 10 beim Anlegen einer Wechselspannung als Strangspannung US, insbesondere einer hochfrequenten Wechselspannung.

Zusätzlich oder alternativ zu der wenigstens einen elektrischen Größe können auch andere physikalische Größen durch die Auswerteeinheit erfasst werden, beispielsweise die Drehzahl der elektrischen Maschine, die sich abhängig von der Gesamtimpedanz ZG ändern kann.

Wie es in Figur 4 schematisch veranschaulicht ist, kann der Kopplungszweig 23 der Messschaltung 22 eine Zusatzwicklung 31 aufweisen bzw. durch eine Zusatzwicklung 31 gebildet sein, die am Zahn 15 angeordnet ist, der die mit dem Kopplungszweig 23 gekoppelte Wicklung 16 des zugeordneten Phasenstrangs 11, beispielsgemäß des ersten Phasenstrangs 11u, trägt. Die Zusatzwicklung 31 kann eine oder mehrere Windungen aufweisen. An der Zusatzwicklung 31 kann ein Träger 32 angeordnet und mechanisch und elektrisch mit der Zusatzwicklung 31 verbunden sein. Der Träger 32 kann beispielsweise als Leiterplatte ausgestaltet sein. Auf dem Träger 32 können weitere Bauteile und vorzugsweise sämtliche weitere Bauteile der Messschaltung 22 angeordnet sein (vergleiche Figuren 3 und 4).

Die Erfindung betrifft eine Messanordnung 21 aufweisend eine Messschaltung 22, die an oder in einer elektrischen Maschine 10 angeordnet ist, sowie eine Auswerteeinheit 24, die außerhalb der elektrischen Maschine 10 angeordnet und mit einem der Phasenstränge 11 der elektrischen Maschine 10 verbunden ist. Hierfür werden die ohnehin vorhandenen elektrischen Anschlüsse des Phasenstrangs 11 verwendet. Die Messschaltung 22 hat einen Sensor 25, der seinen Sensorwert abhängig von einem zu messenden Parameter P kontinuierlich oder stufenweise verändern kann. Der Sensor 25 ist mit einem Kopplungszweig 23 der Messschaltung 22 gekoppelt, der wiederum mit wenigstens einer der Wicklungen 16 vorzugsweise eines einzigen Phasenstrangs 11 gekoppelt ist, ohne galvanische Verbindung mit der Wicklung 16, beispielsweise induktiv. Die Messschaltung 22 ist dazu eingerichtet, eine Kopplungszweigimpedanz ZK des Kopplungszweigs 23 zumindest temporär abhängig von dem Sensorwert und mithin dem Parameter P zu beeinflussen, wodurch sich die Gesamtimpedanz ZG des Phasenstrangs 11 ändert. Die Beeinflussung der Gesamtimpedanz ZG kann von der Auswerteeinheit 24 erfasst werden. Auf diese Weise kann über die elektrischen Anschlüsse des Phasenstrangs 11 eine Übermittlung eines den Parameter P beschreibenden Signals an die Auswerteeinheit 24 erfolgen.

Bezugszeichenliste:

| 10 | elektrische Maschine |
| 11 | Phasenstrang |
| 11u | erster Phasenstrang |
| 11v | zweiter Phasenstrang |
| 11w | dritter Phasenstrang |
| 12 | Rotor |
| 13 | Permanentmagnet |
| 14 | Stator |
| 15 | Zahn |
| 16 | Wicklung |
| 20 | Steuergerät |
| 21 | Messanordnung |
| 22 | Messschaltung |
| 23 | Kopplungszweig |
| 24 | Auswerteeinheit |
| 25 | Sensor |
| 29 | Schalter |
| 30 | Zusatzimpedanz |
| 31 | Zusatzwicklung |
| 32 | Träger |
| φ | Phasenverschiebung |
| D | Drehachse |
| IS | Strangstrom |
| LW | Wicklungsinduktivität |
| P | Parameter |
| RW | Wicklungswiderstand |
| S | Steuersignal |
| US | Strangspannung |
| ZG | Gesamtimpedanz des Phasenstranges |
| ZK | Kopplungszweigimpedanz |
| ZW | Wicklungsimpedanz |

**Patentansprüche**

1. Messanordnung (21) einer elektrischen Maschine (10) aufweisend:

    - wenigstens einen Phasenstrang (11) der elektrischen Maschine (10), der wenigstens eine Wicklung (16) aufweist,
    - eine Messschaltung (22) aufweisend einen mit wenigstens einer der Wicklungen (16) gekoppelten Kopplungszweig (23) und einen mit dem Kopplungszweig (23) gekoppelten Sensor (25), wobei die Messschaltung (22) dazu eingerichtet ist, eine Kopplungszweigimpedanz (ZK) des Kopplungszweigs (23) abhängig von einem mittels des Sensors (25) zu messenden Parameters (P) zu beeinflussen **dadurch gekennzeichnet, dass** der Kopplungszweig (23) galvanisch getrennt mit der wenigstens einen Wicklung (16) gekoppelt ist.

2. Messanordnung nach Anspruch 1, wobei jeder Phasenstrang (11) der elektrischen Maschine (10) eine Reihenschaltung von wenigstens zwei Wicklungen (16) aufweist.

3. Messanordnung nach Anspruch 1 oder 2, wobei der Sensor (25) im Kopplungszweig (23) angeordnet ist.

4. Messanordnung nach einem der vorhergehenden Ansprüche, wobei der Sensor (25) einen von dem zu messenden Parameter (P) abhängigen Widerstand aufweist.

5. Messanordnung nach einem der vorhergehenden Ansprüche, wobei der Kopplungszweig (23) eine Kopplungszweigimpedanz (ZK) aufweist, die einen ohmschen Anteil und/oder einen induktiven Anteil aufweist.

6. Messanordnung nach Anspruch 4, wobei die Kopplungszweigimpedanz (ZK) frei ist von einem kapazitiven Anteil.

7. Messanordnung nach einem der vorhergehenden Ansprüche, wobei die Messschaltung (22) einen mittels eines Steuersignals (S) zwischen einem leitenden und einem sperrenden Zustand umschaltbaren Schalter (29) aufweist.

8. Messanordnung nach Anspruch 7, wobei die Messschaltung (22) dazu eingerichtet ist, das Steuersignal (S) abhängig von dem mittels des Sensors (25) zu messenden Parameters (P) zu erzeugen.

9. Messanordnung nach einem der vorhergehenden Ansprüche, wobei der Kopplungszweig (23) eine Zusatzwicklung (31) aufweist, mittels der der Kopplungszweig (23) induktiv mit der wenigstens einen Wicklung (16) gekoppelt ist.

10. Messanordnung nach Anspruch 9, wobei die Zusatzwicklung (31) um einen Zahn (15) der elektrischen Maschine (10) angeordnet ist, an dem die mit dem Kopplungszweig (23) gekoppelte Wicklung (16) angeordnet ist.

11. Messanordnung nach einem der vorhergehenden Ansprüche, außerdem aufweisend ein Steuergerät (20), das dazu eingerichtet ist, den Strangstrom (IS) und/oder die Strangspannung (US) für den wenigstens einen Phasenstrang (11) der elektrischen Maschine (10) zu steuern.

12. Messanordnung nach einem der vorhergehenden Ansprüche, außerdem aufweisend eine Auswerteeinheit (24), die dazu eingerichtet ist, die Gesamtimpedanz (ZG) zu ermitteln, die durch die Kopplungszweigimpedanz (ZK) des Kopplungszweiges (23) und die Wicklungsimpedanz (ZW) der dazu parallel geschalteten Wicklung (16) gebildet ist.

13. Messanordnung nach Anspruch 11 und nach Anspruch 12, wobei die Auswerteeinheit (24) Bestandteil des Steuergeräts (20) ist.

**Claims**

1. Measuring assembly (21) of an electrical machine (10) comprising:

    - at least one phase (11) of the electrical machine (10) comprising at least one winding (16),
    - a measuring circuit (22) comprising a coupling branch (23) coupled with at least one of the windings (16) and a sensor (25) coupled with the coupling branch (23), wherein the measuring circuit (22) is configured to influence a coupling branch impedance (ZK) of the coupling branch (23) depending on a parameter (P) to be measured by means of the sensor (25), **characterized in that** the coupling branch (23) is coupled with the at least one winding (26) in a galvanically isolated manner.

2. Measuring assembly according to claim 1, wherein each phase (11) of the electrical machine (10) comprises a series connection of at least two windings (16).

3. Measuring assembly according to claim 1 or 2, wherein the sensor (25) is arranged in the coupling branch (23).

4. Measuring assembly according to any of the preceding claims, wherein the sensor (25) comprises a resistance depending on the parameter (P) to be measured.

5. Measuring assembly according to any of the preceding claims, wherein the coupling branch (23) comprises a coupling branch impedance (ZK) having an ohmic component and/or an inductive component.

6. Measuring assembly according to claim 4, wherein the coupling branch impedance (ZK) does not comprise a capacitive component.

7. Measuring assembly according to any of the preceding claims, wherein the measuring circuit (22) comprises a switch (29) that can be switched by means of a control signal (S) between a conductive and a blocking condition.

8. Measuring assembly according to claim 6, wherein the measuring circuit (22) is configured to create the control signal (S) depending on the parameter (P) to be measured by means of the sensor (25).

9. Measuring assembly according to any of the preceding claims, wherein the coupling branch (23) comprises an additional winding (31) by means of which the coupling branch (23) is inductively coupled with the at least one winding (16).

10. Measuring assembly according to claim 9, wherein the additional winding (31) is arranged around a tooth (15) of the electrical machine (10) on which the winding (16) is arranged that is coupled to the coupling branch (23).

11. Measuring assembly according to any of the preceding claims, comprising in addition a control device (20), which is configured to control the phase current (IS) and/or the phase voltage (US) for the at least one phase (11) of the electrical machine (10).

12. Measuring assembly according to any of the preceding claims, comprising in addition an evaluation unit (24) that is configured to determine the total impedance (ZG), which is formed by the coupling branch impedance (ZK) of the coupling branch (23) and the winding impedance (ZW) of the winding (16) connected in parallel thereto.

13. Measuring assembly according to claim 11 and according to claim 12, wherein the evaluation unit (24) is part of the control device (20).

**Revendications**

1. Dispositif de mesure (21) d'une machine électrique (10), comportant :

     - au moins un conducteur de phase (11) de la machine électrique (10), qui présente au moins un enroulement (16),
     - un circuit de mesure (22) présentant une branche de couplage (23), couplée à au moins un des enroulements (16), et un capteur (25) couplé à la branche de couplage (23), le circuit de mesure (22) étant conçu pour influencer une impédance de branche de couplage (ZK) de la branche de couplage (23), en fonction d'un paramètre (P) devant être mesuré à l'aide du capteur (25),
     **caractérisé en ce que** la branche de couplage (23) est couplée à l'enroulement (16), au nombre d'au moins un, en étant séparée galvaniquement.

2. Dispositif de mesure selon la revendication 1, dans lequel chaque conducteur de phase (11) de la machine électrique (10) présente un montage en série d'au moins deux enroulements (16).

3. Dispositif de mesure selon la revendication 1 ou 2, dans lequel le capteur (25) est disposé dans la branche de couplage (23).

4. Dispositif de mesure selon une des revendications précédentes, dans lequel le capteur (25) présente une résistance qui est fonction du paramètre (P) à mesurer.

5. Dispositif de mesure selon une des revendications précédentes, dans lequel la branche de couplage (23) présente une impédance de branche de couplage (ZK) qui comporte une part ohmique et/ou une part inductive.

6. Dispositif de mesure selon la revendication 4, dans lequel l'impédance de branche de couplage (ZK) est exempte de part capacitive.

7. Dispositif de mesure selon une des revendications précédentes, dans lequel le circuit de mesure (22) comporte un interrupteur (29) pouvant être commuté à l'aide d'un signal de commande (S) entre un état conducteur et un état bloquant.

8. Dispositif de mesure selon la revendication 7, dans lequel le circuit de mesure (22) est conçu pour générer le signal de commande (S) en fonction du paramètre (P) à mesurer à l'aide du capteur (25)

9. Dispositif de mesure selon une des revendications précédentes, dans lequel la branche de couplage (23) présente un enroulement supplémentaire (31) à l'aide duquel la branche de couplage (23) est couplée de manière inductive à l'enroulement (16), au nombre d'au moins un.

10. Dispositif de mesure selon la revendication 9, dans lequel l'enroulement supplémentaire (31) est disposé autour d'une dent (15) de la machine électrique (10), sur laquelle est installé l'enroulement (16) couplé à la branche de couplage (23).

11. Dispositif de mesure selon une des revendications précédentes, présentant en outre un appareil de commande (20) qui est conçu pour commander le courant de phase (IS) et/ou la tension de phase (US) pour le conducteur de phase (11), au nombre d'au moins un, de la machine électrique (10)

12. Dispositif de mesure selon une des revendications précédentes, présentant en outre une unité d'évaluation (24) qui est conçue pour déterminer l'impédance totale (ZG), laquelle est constituée de l'impédance de branche de couplage (ZK) de la branche de couplage (23) et de l'impédance d'enroulement (ZW) de l'enroulement (16) branché en parallèle avec celle-ci.

13. Dispositif de mesure selon la revendication 11 et selon la revendication 12, dans lequel l'unité d'évaluation (24) fait partie intégrante de l'appareil de commande (20).

**Fig. 1**

**Fig. 2**

**Fig. 3**

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016106431 A1
- DE 102017108112 A1
- EP 2211455 A2
- DE 102007043872 A1
- WO 2019154801 A1